# EUROPÄISCHE PATENTSCHRIFT

(11) **EP 0 936 092 B1**
(45) Veröffentlichungstag und Bekanntmachung des Hinweises auf die Patenterteilung: **21.08.2002**
(21) Anmeldenummer: 99250021.5
(22) Anmeldetag: 21.01.1999
(51) Int. Cl.: B60J 5/04, E05F 11/48, B60J 1/17

(54) **Kraftfahrzeugtür**
Vehicle door
Porte de véhicule

(30) Priorität: 23.01.1998 DE 19802478
(43) Veröffentlichungstag der Anmeldung: 18.08.1999
(73) Patentinhaber: Brose Fahrzeugteile GmbH & Co. KG Coburg, 96450 Coburg (DE)
(72) Erfinder: Pleiss, Eberhard, 74193 Schwaigern (DE)
(74) Vertreter: Baumgärtel, Gunnar, Dr.

(56) Entgegenhaltungen:
- DE-A- 19 611 074
- DE-C- 3 921 289
- DE-C- 19 511 105

## Beschreibung

Die Erfindung betrifft eine Kraftfahrzeugtür mit einem Türaußenblech und einen mit einem großflächigen Ausschnitt versehenen Türinnenblech, der von einer Trägerplatte teilweise abdeckbar ist, gemäß dem, im Dokument DE 195 11105C offenbarten, Oberbegriff des Patentanspruchs 1.

Aus DE 196 11 074 A1 ist ein sogenannter außenliegender doppelsträngiger Bowdenrohr-Fensterheber bekannt, dessen mechanisches Verstellsystem zwischen dem Türaußenblech und der Fensterscheibe angeordnet ist. Die Befestigung der Führungsschienen erfolgt über Schraubverbindungen am Türinnenblech, das mit dem Türaußenblech verbördelt ist. Außenliegende Fensterheber haben den Vorteil, daß sie sehr platzsparend sind und den Raum zwischen Fensterscheibe und Türinnenverkleidung nicht einschränken, wodurch sich ein größerer Gestaltungsspielraum für die Türinnenverkleidung ergibt. Nachteilig ist jedoch, daß die Verbindung des Konstruktionsprinzips eines außenliegenden Fensterhebers mit den Vorteilen eines Türmoduls, bestehend aus einer Vielzahl auf einer Trägerplatte vormontierten und vorprüfbaren Funktionseinheiten, nicht ohne weiteres möglich erscheint.

Derartige Türmodule werden in DE 195 09 282 A1 und DE 195 11 105 C1 beschrieben. Demnach sind die Führungsschienen der Seilfensterheber über geeignete Befestigungsstellen mit der Trägerplatte verbunden, was offensichtlich eine Anbindung der Fensterscheibe lediglich nach Art eines sogenannten innenliegenden Fensterhebers erlaubt, bei dem die Fensterscheibe zwischen dem Türaußenblech und dem Fensterheber angeordnet ist. Zwangsläufig kann die Gestaltung der Trägerplatte nicht ohne Berücksichtigung der Erfordernisse der Fensterscheibenführung und somit des Fensterhebers erfolgen. Die im Türinnenblech vorgesehenen großflächigen Ausschnitte werden durch die jeweilige Trägerplatte vollständig abgedeckt. Um die Anbindung der Fensterscheibe an den Fensterheber nach erfolgter Trägerplattenmontage zu ermöglichen, stehen in der Trägerplatte spezielle Montageöffnungen zur Verfügung, die - z.B. durch Gummideckel - nach Abschluß der Montage wieder verschließbar sind.

Die EP 0 420 617 B1 beschreibt eine Türfensterkassette, bestehend im wesentlichen aus einem Fensterrahmen und daran befestigten seitlichen Führungskanälen für die Fensterscheibe sowie einer dazwischen liegenden Montageplatte. Direkt auf der Montageplatte sind vier einzelne Seilumlenkrollen und eine Antriebseinheit montiert. Eine horizontal verlaufende Stange ist mit ihren Enden an den vertikal verlaufenden Abschnitten der um die Umlenkrollen geführten Seilschlaufe befestigt. Ober Verbindungsbolzen der Stange wird die Fensterscheibe mit dem Fensterheber verbunden. Somit stellt die Trägerplatte einen integralen Bestandteil des Fensterhebers dar und muß deshalb exakt an die Führungsbedürfnisse der Fensterscheibe angepaßt werden.

Der Erfindung liegt die Aufgabe zugrunde, die gattungsgemäße Kraftfahrzeugtür derart weiterzuentwickeln, daß der Einsatz von Trägerplatten mit darauf montierten mechanischen und/oder elektrischen und/oder elektronischen Komponenten auch in Verbindung mit außenliegenden Fensterhebem gewährleistet ist. Die Erfindung soll einen konstruktiv einfachen Aufbau aufweisen und die Montage der Kraftfahrzeugtür erleichtern.

Erfindungsgemäß wird die Aufgabe durch die kennzeichnenden Merkmale des Patentanspruchs 1 gelöst. Demnach ist die Trägerplatte auf der dem Türaußenblech zugewandten Seite mit einer Montageschiene verbunden, die die Fensterscheibe umgreift und an der wenigstens eine Führungsschiene eines Bowdenrohr-Fensterhebers verschiebbar lagert. Durch den Einsatz dieser einfachen technischen Mittel entsteht eine Kombination einer Trägerplatte mit einem außenliegenden Fensterheber unter Beibehaltung aller Vorteile eines umfassend ausstattbaren und vorprüfbaren Türmoduls.

Gemäß einer ersten Variante der Erfindung ist die Montageschiene als separates Teil ausgeführt und über ihre Enden mit der Trägerplatte durch Schrauben, Nieten, Schweißen oder Kleben verbunden. Soweit unterschiedliche technische Anforderungen an die Trägerplatte und die Montageschiene den Einsatz verschiedener Materialien nahelegen, steht dem natürlich nichts entgegen.

Eine zweite Variante der Erfindung sieht vor, die Montageschiene einteilig in die Trägerplatte zu integrieren. Die Integration der Montageschiene in die Trägerplatte bietet sich insbesondere an, wenn diese als Kunststoffteil oder Gußteil ausgeführt werden soll, weil moderne Spritz- und Gußtechniken die kostengünstige Herstellung auch komplexer Teile in hoher Qualität erlauben. Ein weiterer Vorteil der einstückigen Ausführung ergibt sich aus der Vermeidung von Toleranzabweichungen und eines Montageschrittes zum Verbinden der beiden Teile.

Eine einteilig mit der Trägerplatte verbundene Montageschiene kann auch auf der Basis eines Blechteils erzielt werden, wenn der Bereich der Führungsschiene unter Beibehaltung seiner randseitigen Verbindungen zur Trägerplatte ausgestanzt und durch Tiefziehen in Richting der Naßraumseite der Fahrzeugtür ausgestellt wird.

Vorteilhaft erscheint auch die Integration des Seiltrommelgehäuses in die Montageschiene, wodurch eine Bauteilreduzierung erreicht wird, sowie die Befestigung der Antriebseinheit an der Montageschiene. Darüber hinaus kann eine Vormontage des gesamten Fensterhebersystems an die Montageschiene vorgesehen werden, falls eine separate, mit der Trägerplatte zu verbindende Montageschiene zum Einsatz kommt.

Zur Vereinfachung der Montage der in der Türkarosserie zu befestigenden Funktionskomponenten, sollten diese Komponenten ebenfals an der Montageschiene verschiebbar lagern. Dies kann insbesondere dadurch geschehen, daß die Funktionskomponenten (z.B. Türschloß und Außengriffhalter) mit der verschiebbaren Führungsschiene des Fensterhebers bzw. - bei einem doppelsträgigen Bowdenrohr-Fensterheber für eine Fahrer- oder Beifahrertür - mit der B-säulenseitigen Führungsschiene verbunden werden. So erfolgt durch die Positionierung der Führungsschiene gleichzeitig die Positionierung der mit ihr verbundenen Funktionskomponenten. Diese Verbindungen können beispielsweise durch Träger vorgenommen werden, die an den entsprechenden Komponenten befestigt bzw. angeformt sind.

Eine weitere Vorzugsvariante der Erfindung sieht vor, daß bei Verwendung eines doppelsträngigen Bowdenrohr-Fensterhebers die die Seiltrommel beinhaltende Antriebseinheit außerhalb des Zwischenraums zwischen den Führungsschienen angeordnet ist. Darüber hinaus weist die der Antriebseinheit zugewandte Führungsschiene im endseitigen Umlenkbereich des Seils einen Seilausgang auf, der der Antriebseinheit zugewandt ist, und einen Seilausgang, der der anderen Führungsschiene zugewandt ist. Ein solcher Aufbau stellt sicher, daß die verschiebbaren Führungsschienen problemlos aus ihrer Transportposition in die Betriebsposition verschoben werden können, ohne den Fensterheberantrieb mitbewegen oder elektrische Steckverbinder zwischen dem Motor und/oder einer elektronischen Steuereinrichtung unterbrechen zu müssen. Dadurch wird eine umfassende Vorprüfbarkeit des Türmodul sichergestellt und das Risiko von Fehlern herabgesetzt.

Nachfolgend wird die Erfindung anhand eines Ausführungsbeispiels und der dargestellten Figuren näher erläutert. Es zeigen:
- Figur 1: Seitenansicht der Naßraumseite einer Trägerplatte mit vormontierten Funktionskomponenten vor ihrem Einbau in die Türkarosserie;
- Figur 2: schematisierter Querschnitt einer Fahrzeugtür, die mit einem Modul gemäß Figur 1 ausgerüstet ist;
- Figur 3: Ansicht einer Türkarosserie mit großem Ausschnitt im Türinnenblech zur Ausrüstung mit einem Türmodul gemäß Figur 1.

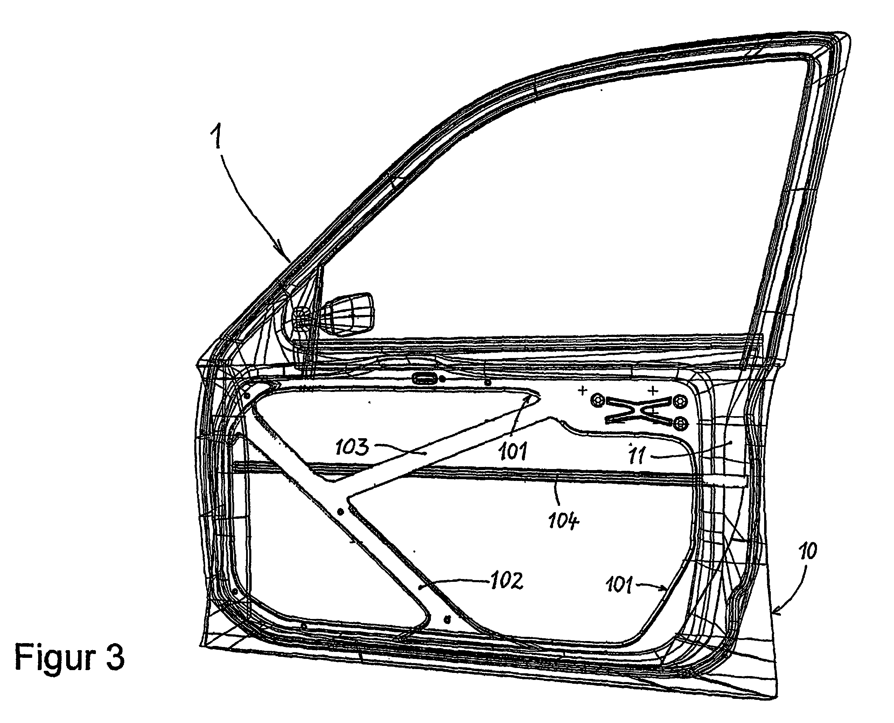

Die in Figur 3 dargestellte Türkarosserie 1 weist einen großen Ausschnitt 101 im Türinnenblech 11 auf, der von den Streben 102, 103 zur Erhöhung der Steifigkeit der Türkarosserie 1 durchquert wird. Ein zusätzliches Verstärkungselement 104 dient als Seiteneinfahrschutz. Der große Ausschnitt 101 eignet sich besonders gut zur Komplettierung der Fahrzeugtür mit einem sogenannten Türmodul, dessen Trägerplatte 2 den Ausschnitt 101 zumindest teilweise abdeckt und die wesentlichen Funktionskomponenten trägt.

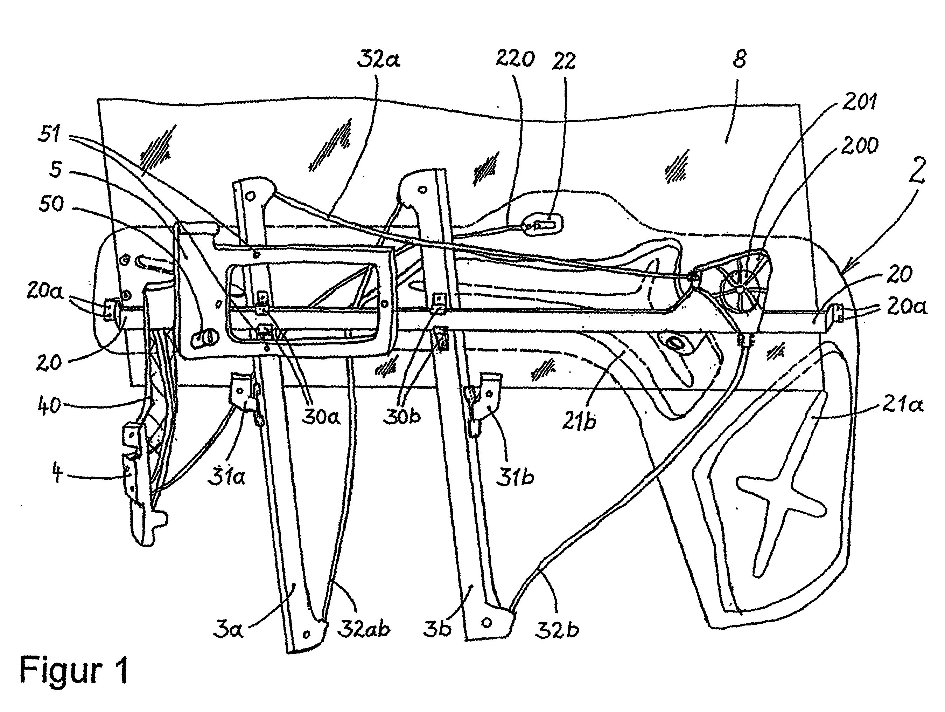

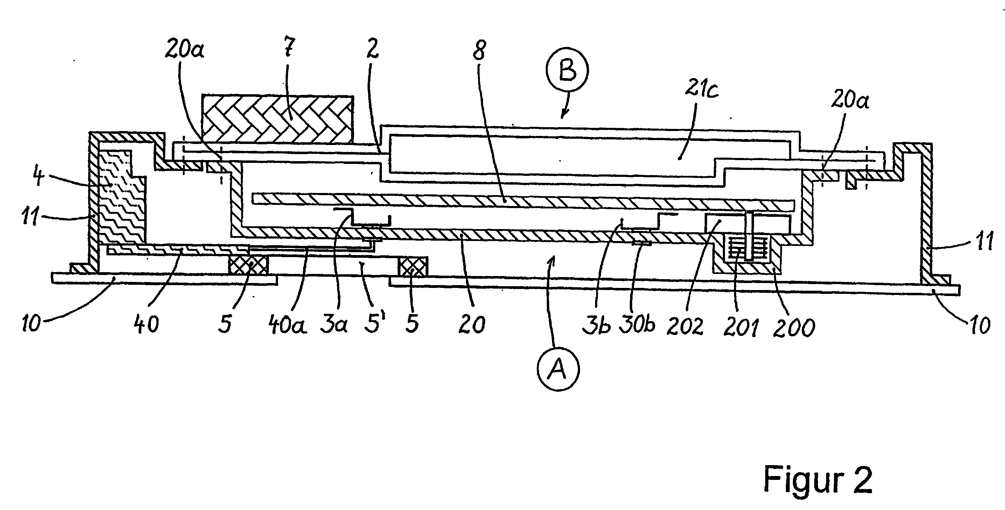

Figur 1 zeigt ein solches Türmodul, das unter anderem mit einem außenliegenden, d.h. zwischen der Fensterscheibe 8 und dem Türaußenblech 10 angeordneten, doppelstängigen Bowdenrohr-Fensterheber und einem Schloß 4 ausgerüstet ist. Mittels des schematischen Querschnitts von Figur 2, der sämtliche wichtigen Bauteile des Türmoduls unabhängig von deren tatsächlichen Lage in der Fahrzeugtür schneidet, kann ein leichteres Verständnis hinsichtlich des erfindungsgemäßen Aufbaus erzielt werden.

Ein im wesentlichen horizontal und parallel zur Trägerplatte 2 bzw. zum Türaußenblech 10 verlaufende Montageschiene 20 umgreift auf der Naßraumseite A die Fensterscheibe 8 und ist mit ihren Enden über die Befestigungsstellen 20a mit der Trägerplatte 2 fest verbunden. An der Montageschiene 20 lagern mittels der Halteelemente 30a, 30b die Führungsschienen 3a, 3b des doppelsträngigen Seilfensterhebers verschiebbar, wobei die eine Führungsschiene 3a mit dem Schloß 4 und dem Außengriffhalter 5 in Verbindung steht. Die Darstellung von Figur 2 zeigt die Funktionspositionen von Fensterheber und Schloß 4. In der (nicht dargestellten) Transport- und Montageposition sind die Führungsschienen 3a, 3b und die damit verbundenen Funktionskomponenten (Schloß 4 und Außengriffhalter 5) soweit in Richtung der Antriebseinheit 202 verschoben, daß ein problemloses Einfädeln des Fensterhebers und des Schlosses 4 möglich ist. Erst nachdem die Trägerplatte 2 am Türinnenblech 11 befestigt wurde, wird die Führungsschiene 3a mit dem Schloß 4 in die Betriebsposition verschoben, so daß auch das Schloß 4 an der vorgesehenen Stelle der Türkarosserie befestigt werden kann.

Die Verbindung zwischen der Führungsschiene 3a und dem Schloß 4 kann auf unterschiedliche Weise hergestellt werden. So kann beispielsweise - wie in Figur 1 angedeutet - das Schloß 4 über einen Schloßträger 40 an den Außengriffhalter 5 angebunden sein, der seinerseits über die Befestigungsstellen 51 an die Führungsschiene 3a montiert ist. Andererseits ist es aber auch möglich, das Schloß 4 über seinen Schloßträger 40 direkt - oder wie in Figur 2 angedeutet - über einen weiteren Träger 40a die aus Schloß 4 und Außengriffhalter 5 bestehende Einheit an der Führungsschiene 3a zu befestigen.

Die in der Figur 1 dargestellten Halteelemente 30a, 30b dienen lediglich der Beschreibung des prinzipiellen Aufbaus der Erfindung; grundsätzlich kann jede Verbindung zwischen der Montageschiene 20 und wenigstens einer Führungsschiene 3a, 3b zur Anwendung kommen, die eine verschiebbare Lagerung derart darstellt, daß die betreffende Führungsschiene 3a, 3b aus einer Transport- bzw. Montageposition in die Betriebsposition verschoben werden kann. Dazu eignen sich auch in die Montageschiene 2 eingearbeitete Kulissenführungen, in die paßfähige Führungselemente der Führungsschienen 3a, 3b eingreifen.

Sofern die Montageschiene 2 als Guß- oder Spritzteil ausgeführt werden soll, kann zumindest das Seiltrommelgehäuse 200, in dem die Seiltrommel 201 lagert, einstückig in die Montageschiene 20 integriert werden. Dadurch spart man ein separates Seiltrommelgehäuse ein. Insbesondere dann, wenn der erforderliche Verschiebeweg zwischen der Transport-/Montageposition und der Betriebsposition der Führungsschienen 3a, 3b eines doppelsträngigen Bowdenrohr-Fensterhebers relativ lang ist, sollte die Antriebseinheit 202 mit der Seilrolle 201 außerhalb des Zwischenraums zwischen den Führungsschienen 3a, 3b, zweckmäßigerweise auf der dem Schloß 4 abgewandten Seite der Trägerplatte 2, angeordnet sein.

Zur Minimierung von Biegungen in den Bowdenrohren und somit zur Minimierung von Reibungsverlusten sind die Seilausgänge In den Umlenkbereichen der der Antriebseinheit 200, 201, 202 zugewandten Führungsschiene 3a entgegengesetzt gerichtet, wobei der über das Bowdenrohr 32b mit der Seiltrommel 201 verbundene Seilausgang der Antriebseinheit zugewandt ist, während der andere Seilausgang der Führungsschiene 3b zugewandt ist und direkt mit deren unteren Seilausgang über das Bowdenrohr 32ab in Verbindung steht. Mittels des Bowdenrohrs 32a zwischen dem oberen Seilausgang der Führungsschiene 3a und der Seiltrommel 201 ist die Seilschlaufe und damit der Kraftfluß im Fensterheber geschlossen.

Zur Befestigung der Fensterscheibe 8 sind an jeder Führungsschiene 3a, 3b Mitnehmer 31a, 31b vorgesehen, die mit der Seilschlaufe fest verbunden sind und bei Betätigung des Fensterhebers entlang der Führungsschienen 3a, 3b gehoben bzw. gesenkt werden.

Die für das Ausführungsbeispiel ausgewählte Trägerplatte 2 stellt ein doppelwandiges Kunststoffteil dar, das auf der Basis der Blasformtechnik hergestellt wurde. Zur Versteifung der Trägerplatte 2 sind Versteifungsbereiche 21a, 21b vorgesehen, in denen die beiden Wandungen miteinander verbunden sind. Ein oder mehrere Hohlräume können zur Unterbringung mechanischer oder elektrischer Komponenten oder zur Führung von Kabeln und Gestängen dienen. Darüber hinaus kann ein abgeschlossener Hohlraum auch als Resonanzraum für einen Lautsprecher fungieren.

Im oberen Bereich der Trägerplatte 2 ist eine Griffschale 22 integriert, in der der Türöffner lagert; über den Bowdenzug 220 wird die Betätigungskraft an das Schloß 4 weitergeleitet.

Auf der Trockenraumseite B trägt die Trägerplatte 2 einen Sideairbag 7, der sich im Bedarfsfall durch eine Sollbruchstelle der (nicht dargestellten) Türinnenverkleidung entfaltet.

Da die Trägerplatte 2 den Ausschnitt 101 im Türinnenblech 11 nur teilweise abdeckt, ist es zur Abtrennung von Naßraum A und Trockenraum B erforderlich, zumindest den verbleibenden offenen Bereich durch geeignete Mittel abzudecken. Dies kann beispielsweise durch Aufkleben einer entsprechend zugeschnittenen Folie erfolgen.

### Bezugszeichenliste

- 1: Türkarosserie
- 10: Türaußenblech
- 11: Türinnenblech
- 101: Ausschnitt im Türinnenblech
- 102: Strebe des Türinnenblechs
- 103: Strebe des Türinnenblechs
- 104: Verstärkungselement

- 2: Trägerplatte
- 20: Montageschiene
- 20a: Befestigungsstelle / Verbindungsstelle
- 21a: Versteifungsbereich
- 21b: Versteifungsbereich
- 21c: Hohlraum
- 22: Griffschale des Türinnenöffners
- 200: Seiltrommelgehäuse
- 200': Seiltrommelgehäuse
- 201: Seiltrommel
- 202: motorische Antriebseinheit
- 220: Bowdenzug zwischen Türinnenöffner und Schloß

- 3: Führungsschiene
- 3a: Führungsschiene
- 3b: Führungsschiene
- 30a: Halteelement
- 30b: Halteelement
- 31a: Mitnehmer/Gleiter
- 31b: Mitnehmer/Gleiter
- 32a: Bowden
- 32aa: Bowdenabstützung
- 32ab: Bowden
- 32b: Bowden
- 32bb: Bowdenabstützung
- 320a: Seil
- 320b: Seil

- 4: Schloß
- 40: Schloßträger
- 40a: Träger/Verbindungsstange
- 41: Träger

- 5: Außengriffhalter
- 5': Aussparung
- 50: Schließzylinder
- 51: Befestigungsstelle
- 52: Befestigungsstelle

- 7: Sideairbag

- 8: Fensterscheibe

- A: Naßraumseite
- B: Trockenraumseite

## Patentansprüche

1. Kraftfahrzeugtür mit einem Türaußenblech (10) und einem mit einem großflächigen Ausschnitt versehenen Türinnenblech (11) der von einer Trägerplatte (2) teilweise abdeckbar ist, wobei die Trägerplatte einen Bowdenrohr-Fensterheber und gegebenenfalls weitere Funktionseinheiten, wie z.B. Schloß, Sideairbag, Elektronik und/oder elektrische Kabel, trägt, und mit einer Türinnenverkleidung, die die Tür zum Fahrzeuginnenraum hin abschließt,
**dadurch gekennzeichnet,**
**daß** die Trägerplatte (2) auf der dem Türaußenblech (10) zugewandten Seite mit einer Montageschiene (20) verbunden ist, die die Fensterscheibe (4) umgreift und an der wenigstens eine Führungsschiene (3a, 3b) des Bowdenrohr-Fensterhebers verschiebbar lagert.

2. Kraftfahrzeugtür nach Anspruch 1, **dadurch gekennzeichnet, daß** die Montageschiene (20) als separates Teil ausgeführt und über ihre Enden mit der Trägerplatte (2) durch Schrauben, Nieten, Schweißen oder Kleben verbunden ist.

3. Kraftfahrzeugtür nach Anspruch 1, **dadurch gekennzeichnet, daß** die Montageschiene (20) einteilig in die Trägerplatte (2) integriert ist.

4. Kraftfahrzeugtür nach Anspruch 3, **dadurch gekennzeichnet, daß** die Trägerplatte (2) ein Kunststoffteil mit angeformter Montageschiene ist.

5. Kraftfahrzeugtür nach Anspruch 3, **dadurch gekennzeichnet, daß** die Trägerplatte (2) ein Gußteil mit angegossener Montageschiene (20) ist.

6. Kraftfahrzeugtür nach Anspruch 3, **dadurch gekennzeichnet, daß** die Trägerplatte (2) ein Blechteil mit ausgestanzter Montageschiene (20) ist.

7. Kraftfahrzeugtür nach einem der voranstehenden Ansprüche, **dadurch gekennzeichnet, daß** die Montageschiene (20) die Antriebseinheit des Bowdenrohr-Fensterhebers trägt, wobei das zu dieser Antriebseinheit gehörige Seiltrommelgehäuse (200) vorzugsweise einstückig in die Montageschiene (20) integriert ist.

8. Kraftfahrzeugtür nach einem der voranstehenden Ansprüche, **dadurch gekennzeichnet, daß** die Führungsschiene bzw. bei einem doppelsträgigen Bowdenrohr-Fensterheber die B-säulenseitige Führungsschiene (3a) mit dem Außengriffhalter (5) und/oder dem Türschloß (4) verbunden ist.

9. Kraftfahrzeugtür nach Anspruch 8, **dadurch gekennzeichnet, daß das** Türschloß (4) über einen Schloßträger (40) mit dem Außengriffhalter (5) verbunden ist, der wiederum an der Führungsschiene (3a) befestigt ist.

10. Kraftfahrzeugtür nach Anspruch 8, **dadurch gekennzeichnet, daß** das Türschloß (4) und der Außengriffhalter (5) über einen gemeinsamen Träger (40a) an der Führungsschiene (3a) befestigt sind.

11. Kraftfahrzeugtür nach einem der voranstehenden Ansprüche, **dadurch gekennzeichnet, daß** bei Verwendung eines doppelsträngigen Bowdenrohr-Fensterhebers die die Seiltrommel (201) beinhaltende Antriebseinheit außerhalb des Zwischenraums zwischen den Führungsschienen (3a, 3b) angeordnet ist und daß die der Antriebseinheit zugewandte Führungsschlene (3b) im endseitigen Umlenkbereich des Seils einen Seilausgang, der der Antriebseinheit und einen Seilausgang, der der anderen Führungsschiene (3a) zugewandt ist, aufweist.

## Claims

1. Motor vehicle door with an outside door panel (10) and an inside door panel (11) which has a large cut-out section in the surface and which can be covered at least in part by a carrier plate (2) wherein the carrier plate supports a Bowden cable window lifter and where necessary further functional units, such as lock, side airbag, electronics unit and/or electric cables, and with an inside door trim which closes off the door from inside the vehicle, **characterised in that** the carrier plate (2) is connected on the side facing the outside door panel (10) to an assembly rail (20) which engages round the window pane (4) and on which at least one guide rail (3a, 3b) of the Bowden cable widow lifter is mounted for displacement.

2. Motor vehicle door according to claim 1 **characterised in that** the assembly rail (20) is designed as a separate part and is connected by its ends to the carrier plate (2) through screws, rivets, welding or adhesion.

3. Motor vehicle door according to claim 1 **characterised in that** the assembly rail (20) is integrated in one piece into the carrier plate (2).

4. Motor vehicle door according to claim 3 **characterised in that** the carrier plate (2) is a plastics part with integral moulded assembly rail.

5. Motor vehicle door according to claim 3 **characterised in that** the carrier plate (2) is a cast part with integral cast assembly rail (20).

6. Motor vehicle door according to claim 3 **characterised in that** the carrier plate (2) is a sheet metal part with stamped out assembly rail (20).

7. Motor vehicle door according to one of the preceding claims **characterised in that** the assembly rail (20) supports the drive unit of the Bowden cable window lifter wherein the cable drum housing (200) associated with the drive unit is preferably integrated in one piece with the assembly rail (20).

8. Motor vehicle door according to one of the preceding claims **characterised in that** the guide rail or in the case of a two-strand Bowden cable window lifter the guide rail (3a) on the B-pillar side is connected to the outside handle holder (5) and/or to the door lock ().

9. Motor vehicle door according to claim 8 **characterised in that** the door lock (4) is connected through a lock support (40) to the outside handle holder (5) which in turn is fixed on the guide rail (3a).

10. Motor vehicle door according to claim 8 **characterised in that** the door lock(4) and the outside handle holder (5) are fixed on the guide rail (3a) through a common support (40a).

11. Motor vehicle door according to one of the preceding claims **characterised in that** when using a dual-strand Bowden cable window lifter the drive unit containing the cable drum (201) is mounted outside of the interspace between the guide rails (3a, 3b) and that the guide rail (3b) facing the drive unit has in the end guide area of the cable a cable exit which faces the drive unit and a cable exit which faces the other guide rail (3a).

## Revendications

1. Porte de véhicule, comprenant une tôle extérieure de porte (10) et une tôle intérieure de porte (11) dotée d'une découpe à grande surface, qui peut être recouverte partiellement par une plaque-support (2), la plaque-support portant un lève-vitre à gaine Bowden et le cas échéant d'autres unités fonctionnelles, comme par exemple une serrure, un airbag latéral, des unités électroniques et/ou des câbles électriques, et comportant un habillage intérieur de porte, qui referme la porte en direction de l'habitacle du véhicule,
**caractérisée en ce que** la plaque-support (2) est reliée, du côté tourné vers la tôle extérieure de porte (10), à un rail de montage (20) qui entoure la vitre de fenêtre (4) sur lequel au moins un rail de guidage (3a, 3b) du lève-vitre à gaine Bowden est monté avec faculté de translation.

2. Porte de véhicule selon la revendication 1, **caractérisée en ce que** le rail de montage (20) est réalisé comme une pièce séparée, et **en ce qu'**il est relié via ses extrémités à la plaque-support (2) par vissage, rivetage, soudage ou collage.

3. Porte de véhicule selon la revendication 1, **caractérisée en ce que** le rail de montage (20) est intégré d'une seule pièce dans la plaque-support (2).

4. Porte de véhicule selon la revendication 3, **caractérisée en ce que** la plaque-support (2) est une pièce en matière plastique avec rail de montage venu de forme.

5. Porte de véhicule selon la revendication 3, **caractérisé en ce que** la plaque-support (2) est une pièce de fonderie avec rail de montage (20) réalisé par moulage.

6. Porte de véhicule selon la revendication 3, **caractérisé en ce que** la plaque-support (2) est une pièce en tôle avec rail de montage (20) réalisé par poinçonnage.

7. Porte de véhicule selon l'une des revendications précédentes, **caractérisée en ce que** le rail de montage (20) porte l'unité d'entraînement du lève-vitre à gaine Bowden, et **en ce que** le boîtier-tambour (200) pour le câble appartenant à cette unité d'entraînement est de préférence intégré d'une seule pièce dans le rail de montage (20).

8. Porte de véhicule selon l'une des revendications précédentes, **caractérisée en ce que** le rail de guidage, ou respectivement dans le cas d'un lève-vitre à gaine Bowden a deux brins, le rail de guidage (3a) du côté du montant B est relié au porte-poignée extérieur (5) et/ou à la serrure de porte (4).

9. Porte de véhicule selon la revendication 8, **caractérisée en ce que** la serrure de porte (4) est reliée au porte-poignée extérieur (5) via un porte-serrure (40), lequel est à nouveau fixé au rail de guidage (3a).

10. Porte de véhicule selon la revendication 8, **caractérisée en ce que** la serrure de porte (4) et le porte-poignée extérieur (9) sont fixés via un support commun (40a) sur le rail de guidage (3a).

11. Porte de véhicule selon l'une des revendications précédentes, **caractérisée en ce que** lors de l'utilisation d'un lève-vitre à gaine Bowden à deux brins, l'unité d'entraînement qui contient le tambour à câble (201) est agencée à l'extérieur de l'espace intermédiaire entre les rails de guidage (3a, 3b), et **en ce que** le rail de guidage (3b) tourné vers l'unité d'entraînement comporte dans la zone de renvoi terminale du câble une sortie de câble tournée vers l'unité d'entraînement et une sortie de câble tournée vers l'autre rail de guidage (3a).
